# EUROPÄISCHE PATENTSCHRIFT

(11) **EP 2 350 733 B1**
(45) Veröffentlichungstag und Bekanntmachung des Hinweises auf die Patenterteilung: **21.11.2012**
(21) Anmeldenummer: 09748965.2
(22) Anmeldetag: 22.09.2009
(51) Int. Cl.: G02B 27/34, F41G 1/34

(54) **VISIEREINRICHTUNG**
SIGHTING DEVICE
DISPOSITIF DE VISÉE

(30) Priorität: 24.09.2008 AT 14892008
(43) Veröffentlichungstag der Anmeldung: 03.08.2011
(73) Patentinhaber: MB-Microtec Ag, 3172 Niederwangen bei Bern (CH)
(72) Erfinder: PROFOS, Markus, CH-3020 Bern (CH)
(74) Vertreter: Burger, Hannes
(86) Internationale Anmeldenummer: PCT/EP2009/006830
(87) Internationale Veröffentlichungsnummer: WO 2010/034458

(56) Entgegenhaltungen:
- EP-A- 0 254 675
- CH-A5- 667 150
- GB-A- 1 532 090
- US-A- 4 806 007
- US-A1- 2008 184 609

## Beschreibung

Die Erfindung betrifft eine Visiereinrichtung, um ein mit der Visiereinrichtung verbundenes Gerät auszurichten, indem die Achse der Visiereinrichtung mit einer Sichtachse ausgerichtet wird, enthaltend eine längliche Lichtquelle und einen länglichen Körper aus einem Licht leitenden und/oder Licht sammelnden Material, wobei die Lichtquelle und der Körper koaxial angeordnet sind.

Optische Visiereinrichtungen werden benutzt, um ein mit der Visiereinrichtung verbundenes Gerät auszurichten, indem die Achse der Visiereinrichtung mit einer Sichtachse ausgerichtet wird. Anwendung finden optische Visiereinrichtungen beispielsweise in Messgeräten, Kameras und Schusswaffen. Auch zum Ausrichten von Bauten oder Maschinen werden Visiereinrichtungen eingesetzt.

Optische Visiereinrichtungen sind in vielerlei verschiedenen Ausführungsarten bekannt. So kennt man Visiereinrichtungen die sich ausschliesslich für den Gebrauch bei Tageslicht eignen. Andere Visiereinrichtungen sind für den Einsatz in der Dämmerung oder bei Nacht konzipiert, indem sie beispielsweise eingebaute Leuchtmittel aufweisen.

Die meisten der zuletzt genannten Visiereinrichtungen eignen sich schlecht oder gar nicht für den Einsatz bei hellem Umgebungslicht, weil dieses Umgebungslicht die Leuchtkraft der eingebauten Leuchtmittel übersteigt und diese Leuchtmittel somit wirkungslos werden.

Die CH 6 671 50 A betrifft ein Zielgerät mit einem ersten Hohlraum mit einem halbdurchlässigen Spiegel und einem zweiten Hohlraum mit einem Zielmarkenmuster, einer zugehörigen stromlosen Lichtquelle und einem Umlenkspiegel zur Umlenkung des beleuchteten Zielmarkenmusters auf den halbdurchlässigen Spiegel. Im Strahlengang des Zielmarkenmusters ist eine Abbildungsoptik angeordnet, sodass der das Zielgebiet anvisierende Beobachter das Zielmarkenmuster im Unendlichen sieht. Das Zielmarkenmuster und die Lichtquelle sind in einem in das Gerätegehäuse wegnehmbar einsetzbaren Zielmarkenkopf angeordnet.

Das Dokument GB 1 532 090 A bezieht sich auf eine Visiereinrichtung, welche einen rohrformigen Körper 1 aus einem lichtundurchlässigem Material aufweist In dem Körper 1 ist an einem Ende eine Kollimatorlinse angeordnet. An dem anderen Ende des Körpers 1 ist ein transparenter Körper 3 vorgesehen, in welchem eine Lichtquelle 4 angeordnet ist. Der transparente Körper 3 ist an seiner dem Rohrinneren zugewandten Seite von einer Blende 11 bedeckt. Bei guten Lichtverhältnissen ist durch den transparenten Körper geleitetes Umgebungslicht durch einen äußeren Randbereich der Blende sichtbar, während bei schlechtem Umgebungslicht die Lichtquelle 4 als zentraler Punkt in der Mitte der Blende sichtbar ist

EP 0 254 675 und US 2008/0184609 zeigen weitere Visiereinrichtungen.

Ausgehend von diesem Stand der Technik liegt der Erfindung die Aufgabe zu Grunde, eine Visiereinrichtung vorzuschlagen, die sich für den Einsatz bei jeglichen Lichtverhältnissen eignet, das heisst sowohl bei hellem Tageslicht als auch in der Dämmerung und bei Nacht oder in dunklen Räumen, die einfach und kostengünstig herzustellen ist und sehr zuverlässig funktioniert.

Diese Aufgabe wird erfindungsgemäß durch die Visiereinrichtung des Anspruchs 1 dadurch gelöst, dass der Körper als Rohr ausgebildet ist, und dass ein mindestens einen Teil der Mantelfläche des Rohrs umgebendes Gehäuse vorhanden ist, das aus einem durchsichtigen Material besteht, das sich vom Material des Rohres unterscheidet.

Dies hat den Vorteil, dass der genau in Richtung der Längsachse von der Seite des Rohres in die Visiereinrichtung blickende Benutzer durch das Innere des Rohres hindurch einen Ausschnitt der Lichtquelle in der Form eines zentralen, leuchtenden Punktes sieht, der dem lichten Querschnitt des Rohres entspricht. Dieser Punkt ist von zwei konzentrischen Ringen umgeben, wobei der innere Ring der Stirnfläche des Rohres entspricht und der äußere Ring durch einen Bereich des Gehäuses gebildet wird. Bei schwachem oder fehlendem Umgebungslicht sieht der Benutzer im äußeren Ring durch das Gehäuse geleitetes Licht der Lichtquelle, wobei der innere Ring dunkler als der äußere erscheint. Bei starkem Umgebungslicht wird das axial durch das Gehäuse geleitete Licht der Lichtquelle durch das Umgebungslicht überstrahlt. Dafür erscheint der innere Ring hell, weil die Stirnfläche des Rohres Teile des Umgebungslichts abstrahlt, die vom Rohr über dessen Mantelfläche aufgenommen werden. Der Benutzer sieht daher bei allen Lichtverhältnisse und korrekt ausgerichteter Visiereinrichtung stets einen zentralen, leuchtenden Punkt und mindestens einen den Punkt konzentrisch umgebenden, leuchtenden Ring.

Die oben genannte Aufgabe kann auch dadurch gelöst werden, dass die Lichtquelle in einer stirnseitigen Bohrung des Körpers aufgenommen ist.

Die Vorrichtung hat jedoch in allen Varianten den Vorteil, dass der Benutzer, der in Achsrichtung in die Vorrichtung blickt, bei allen Lichtverhältnissen mindestens eine leuchtende Markierung sieht Bei schwachem oder fehlendem Umgebungslicht ist es mindestens die Lichtquelle, die als leuchtender Punkt erscheint und bei starkem Umgebungslicht strahlt die dem Benutzer zugewandte Stirnseite des Körpers gesammeltes Licht ab. Im Übergangsbereich zwischen schwachem und starkem Umgebungslicht ist für den Benutzer sowohl die Lichtquelle als auch die leuchtende Stirnseite des Körpers sichtbar.

Die Visiereinrichtung weist ein Gehäuse auf, das den Körper umgibt und mindestens an der Seite der Bohrung durchsichtig ist. Dadurch ist insbesondere der Körper vor Beschädigungen wie Zerkratzen geschützt und es wird das Eindringen von Verschmutzungen verhindert.

Die Lichtquelle ist eine Kapsel, die auf der Basis von Radiolumineszenz Licht emittiert. Solche Lichtquellen brauchen keine Energiezufuhr wie zum Beispiel elektrischen Strom und strahlen zuverlässig für eine lange Zeit sichtbares Licht ab.

Nach einer Ausführungsart sind im Material des Körpers Moleküle eingebettet, die das Licht streuen. Ein Teil des gestreuten Lichts wird durch Totalreflexion zu den Stirnflächen des Körpers geleitet, so dass diese über die Mantelfläche des Körpers aufgenommenes Licht konzentriert abgeben. Wenn nach einer besonderen Ausführungsart die Moleküle fluoreszierend sind, wird dieser Effekt noch verstärkt.

Nach einer weiteren Ausführungsart ist das Material des Körpers eingefärbt Diese Maßnahme kann die Sichtbarkeit des Körpers verbessern.

Gemäß einer anderen Ausführungsart sind die Farbe des Körpers und die Farbe des von der der Lichtquelle abgestrahlten Lichts unterschiedlich. Dies gewährleistet bei allen Lichtverhältnissen eine deutliche Unterscheidung.

Die Lichtquelle und das Rohr sind kreiszylindrisch ausgebildet und koaxial angeordnet und die Lichtquelle weist einen grösseren Außendurchmesser auf als das Rohr. Diese Gestaltung eignet sich besonders gut zum Ausrichten der Visiereinrichtung mit der Blickrichtung eines Benutzers.

Eine Ausführungsart, welche vorsieht, dass das Gehäuse kreiszylindrisch ausgebildet ist und dass die Lichtquelle und das Rohr in passenden Bohrungen des Gehäuses aufgenommen sind, gewährleistet eine besonders einfache und kostengünstige Herstellung der Visiereinrichtung.

Nach einer weiteren Ausführungsart ist die das Rohr aufnehmende Bohrung des Gehäuses eine Sacklochbohrung mit rechtwinklig zur Längsachse der Visiereinrichtung angeordneter, ebener Bodenfläche. Dies gestattet einen ungehinderten Blick auf die dem Benutzer zugewandte Stirnseite des Rohres, wobei die zwischen der genannten Bodenfläche und der dem Benutzer zugewandten Stirnseite des Gehäuses verbleibende Wand das Innere der Visiereinrichtung vor dem Eindringen von Schmutz und Feuchtigkeit schützt.

Gemäß einer anderen Ausführungsart ist vorgesehen, dass der Übergang von der Bohrung für die Lichtquelle zur Bohrung für das Rohr eine Schrägfläche in der Form eines Kegelstumpfes aufweist. Dies erhöht den Anteil des von der Lichtquelle abgestrahlten Lichts, der in den das Rohr umgebenden Bereich des Gehäuses gelangt.

Gemäß einer weiteren Ausfllhruilgsart ist in der dem Rohr benachbarten Stirnseite des Gehäuses eine Vertiefung angeordnet, die eine umlaufende Schrägfläche in der Form eines Kegelstumpfes und eine zentrale, ebene Bodenfläche aufweist. Vorzugsweise entspricht dabei der Durchmesser der zentralen Bodenfläche dem Außendurchmesser des Rohres. Dadurch sind für den in die Visiereinrichtung blickenden Benutzer die Kreisringe des Gehäuses und des Rohres optisch klar voneinander abgegrenzt.

Zum besseren Verständnis der Erfindung wird diese an Hand von in den nachfolgenden Figuren dargestellten Ausfühnmgsbeispielen näher erläutert.

Es zeigen jeweils in schematisch vereinfachter Darstellung:
- Fig. 1: einen Längsschnitt durch eine erste Ausführungsart der Visiereinrichtung;
- Fig. 2: eine Ansicht der ersten Ausführungsart in Einsichtrichtung bei schlechten Lichtverhältnissen;
- Fig. 3: eine Ansicht der ersten Ausfilhrungsart in Einsichtrichtung bei guten Lichtverhältnissen;
- Fig. 4: einen Längsschnitt durch eine zweite Ausführungsart der Visiereinrichtung die nicht unter den Anspruch 1 fällt.

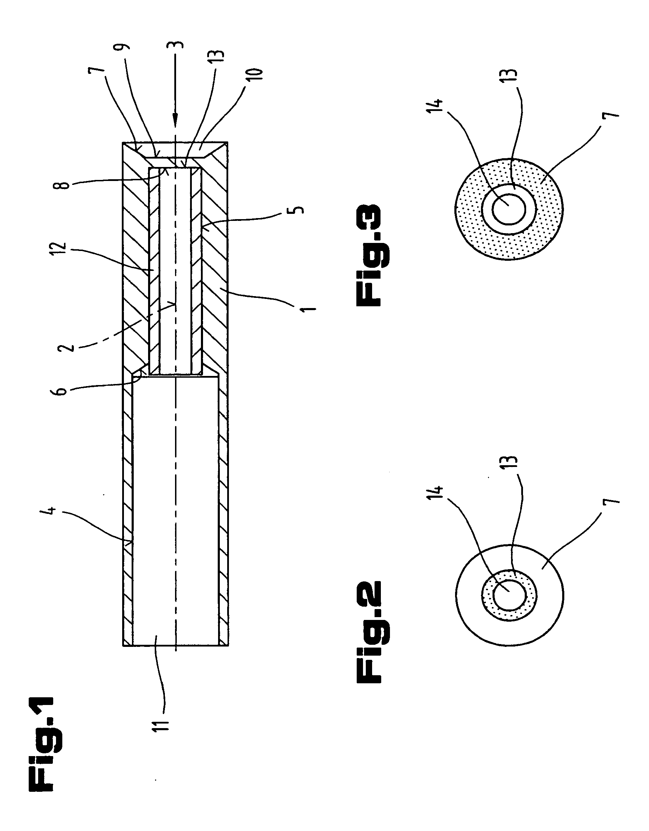

In Fig. 1 ist ein Ausführungsbeispiel der erfindungsgemäßen Visiereinrichtung in einem Längsschnitt dargestellt. Mit der Bezugszahl 1 ist ein längliches Gehäuse bezeichnet, das in seinem Inneren weitere, nachfolgend beschriebene Komponenten aufnimmt. Das Gehäuse ist von kreiszylindrischer Gestalt und besteht aus einem glasklar durchsichtigen Werkstoff, beispielsweise Saphir. Mit 2 ist die Längachse der Visiereinrichtung bezeichnet und mit dem Pfeil 3 die Einsichtrichtung, das heißt die Richtung, in der ein Benutzer in die Visiereinrichtung hinein blickt. Ausgehend von der in Fig. 1 linken Stirnfläche des Gehäuses 1 weist dieses eine erste zylindrische Öffnung 4 auf, die etwa bis zur Längsmitte des Gehäuses reicht. Der Grund der ersten Öffnung 4 geht mit einem Kegelwinkel in eine zweite, kleinere zylindrische Öffnung 5 über. Durch den Kegelwinkel wird eine erste Schrägfläche 6 gebildet, welche die Form einer Innenfläche eines Kegelstumpfmantels hat. Der Grund der zweiten Öffnung 5 befindet sich nahe der in Fig. 1 rechten Stirnseite des Gehäuses 1 und wird durch eine ebene, kreisrunde, rechtwinklig zur Längsachse 2 angeordnete erste Bodenfläche 8 gebildet. In der in Fig. 1 rechten Stirnseite des Gehäuses 1 ist eine Vertiefung 10 angeordnet, die durch eine zweite Schrägfläche 7 und eine zweite Bodenfläche 9 gebildet wird. Die zweite Schrägfläche 7 hat dabei die Form einer Innenfläche eines Kegelstumpfmantels und die zweite Bodenfläche 9 ist eben, kreisrund und rechtwinklig zur Längsachse 2 ausgerichtet. Die erste Schrägfläche 6 und die zweite Schrägfläche 7 können, müssen aber nicht den gleichen Kegelwinkel aufweisen.

In der ersten Öffnung 4 ist eine aktive Lichtquelle 11 aufgenommen. Dabei handelt es sich beispielsweise um ein Luftdicht verschlossenes Glasröhrchen, das auf der Innenseite mit einem Leuchtstoff beschichtet und mit gasförmigem Tritium gefüllt ist. Die vom Tritiumgas emittierten Elektronen aktivieren den Leuchtstoff permanent. Solche Lichtquellen sind beispielsweise unter dem Namen "Trigalight" bei der Firma MB Microtec in CH-3172 Niederwangen in.verschiedenen Farben erhältlich. Die Lichtquelle 11 kann in der ersten Öffnung 4 beispielsweise durch Kleben fixiert sein. Im hier beschriebenen Ausführungsbeispiel leuchtet die Lichtquelle 11 grün.

In der zweiten Öffnung 5 ist ein Rohr 12 eingesetzt, das aus einem durchsichtigen, vorzugweise eingefärbten Material besteht. Das Material des Rohre hat lichtsammelnde Eigenschaften. Damit ist gemeint, dass Licht, das über die Mentelfläche in das Rohr eindringt, gesammelt und zu den Stirnflächen geleitet wird, die in diesem Fall die Form von Kreisringen haben. Ein solches Material kann beispielsweise Polymethylmethacrylat sein, das unter dem Handelsnamen Plexiglas bekannt ist und in das Moleküle eingebettet sein können, die das auf sie treffende Licht streuen oder die unter der Einwirkung von Umgebungslicht fluoreszieren. Durch Totalreflexion wird ein Grossteil des emittierten Lichts bis zu den Stirnflächen 13 geleitet, wo es konzentriert austritt. Im hier Beschriebenen Ausführungsbeispiel ist das Material des Rohres 12 rot eingefärbt.

Fig. 2 zeigt eine Ansicht der Visiereinrichtung in Einsichtrichtung 3 bei geringem Umgebungslicht oder völliger Dunkelheit. Das von der Lichtquelle 11 ausgestrahlte Licht gelangt einerseits durch den Hohlraum der Rohres 12 und erscheint in dieser Ansicht als grüner, kreisrunder Punkt 14 mit einem Durchmesser, der dem Innendurchmesser des Rohres 12 entspricht. Der Punkt 14 ist von einer Kreisringfläche umgeben, welche der Stirnfläche 13 des Rohres 12 entspricht. Diese Kreisringfläche 13 ist in diesem Beispiel mit einem Raster versehen und erscheint daher grau. Damit soll veranschaulicht werden, dass diese Kreisringfläche bei geringem oder fehlendem Umgebungslicht praktisch kein Licht abstrahlt und daher dunkel erscheint. Um zu vermeiden, dass die Kreisringfläche 13 Licht abstrahlt, das von der Lichtquelle 11 axial durch die Wandung des Rohres 12 geleitet wird, kann die der Lichtquelle 11 zugewandte Stirnfläche des Rohres 12 abgedeckt sein. Die Kreisringfläche 13 ist in Fig. 2 von einer weiteren Kreisringfläche umgeben, welche der zweiten Schrägfläche 7 entspricht. Diese weitere Kreisringfläche 7 strahlt licht ab, das von der Lichtquelle 11 durch die erste Schrägfläche 6 in das Material des Gehäuses 1 eindringt, dort durch Totalreflexion weitergeleitet wird und an der zweiten Schrägfläche 7 austritt. Wenn der Benutzer der Visiereinrichtung die Kreisringfläche 7 und den Punkt 14 wie in Fig. 2 genau konzentrisch sieht, blickt sein Auge genau in Richtung der Längsachse 2 in die Visiereinrichtung.

Fig. 3 zeigt eine Ansicht der Visiereinrichtung in Einsichtrichtung 3 bei relativ hellem Umgebungslicht, beispielsweise bei Tageslicht. Das von der Lichtquelle 11 ausgestrahlte Licht gelangt durch den Hohlraum des Rohres 12 und erscheint auch in dieser Ansicht als grüner, kreisrunder Punkt 14 mit einem Durchmesser, der dem Innendurchmesser des Rohres 12 entspricht. Wie beim Beispiel gemäss Fig. 2 ist der Punkt 14 von einer Kreisringfläche umgeben, welche der Stirnfläche des Rohres 12 entspricht. Diese Kreisringfläche 13 erscheint in diesem Beispiel leuchtend rot, weil der Licht sammelnde Kunststoff des Rohres 12 das durch die Mantelflächen des Gehäuses 1 und des Rohres 12 dringende Umgebungslicht sammelt und an der Stirnfläche 13 konzentriert abgibt. Dieser Effekt kann noch verstärkt werden, wenn die der Lichtquelle 11 zugewandte Stirnfläche des Rohres 12 mit einer Verspiegelung versehen wird, die darauf auftreffendes Licht in die Wandung des Rohres zurückwirft. Die weitere Kreisringfläche, welche der zweiten Schrägfläche 7 entspricht und die Kreisringfläche 13 umgibt, ist in diesem Beispiel mit einem Raster versehen und erscheint daher grau. Damit soll veranschaulicht werden, dass diese Kreisringfläche beispielsweise bei Tageslicht dunkler erscheint als die rot leuchtende Kreisringfläche 13, obwohl natürlich auch aus ihr von der grünen Lichtquelle stammendes Licht austritt, wie dies oben im Zusammenhang mit Fig. 2 beschrieben wurde. Wenn der Benutzer der Visiereinrichtung die Kreisringfläche 13 und den Punkt 14 wie in Fig. 3 genau konzentrisch sieht, blickt sein Auge genau in Richtung der Längsachse 2 in die Visiereinrichtung.

Ein besonderer Vorteil der erfindungsgemässen Visiereinrichtung besteht darin, dass sie bei allen Lichtverhältnissen übergangslos verwendbar ist. Der Punkt 14 ist bei allen Lichtverhältnissen gut sichtbar, weil er dem direkten Blick auf die Lichtquelle 11 entspricht und sich farblich von der ihn direkt umgebenden Kreisringfläche 13 unterscheidet. Bei guten Lichtverhältnissen ist die Kreisringfläche 13 durch das von ihr abgestrahlte Licht gut sichtbar, wobei sie umso heller leuchtet, je stärker das Umgebungslicht ist. Bei schlechten Lichtverhältnissen, insbesondere wenn das Umgebungslicht schwächer ist als das von der Lichtquelle 11 angestrahlte Licht, ist die äussere Kreisringfläche 7 deutlich sichtbar. Auch wenn diese die gleiche Farbe hat wie der Punkt 14, ist sie doch durch die dazwischenliegende, andersfarbige Kreisringfläche 13 deutlich vom Punkt 14 abgegrenzt.

Mögliche Abmessungen der Visiereinrichtung sind beispielsweise wie folgt. Das Gehäuse 1 kann einen Durchmesser von 5 mm und eine Länge von 25 mm haben. Die Lichtquelle 11 1 kann einen Durchmesser von 4 mm und eine Länge von 13 mm haben. Das Rohr 12 kann einen Aussendurchmesser von 2,5 und einen Innendurchmesser von 1,5 mm haben. Diese Abmessungen sind rein beispielsweise gemeint und sollen den Schutzumfang der Patentansprüche in keiner Weise einschränken.

In Abweichung zum vorangehend beschriebenen und in den Zeichnungsfiguren dargestellten Ausführungsbeispiel kann beispielsweise das Gehäuse 1 nur in dem Bereich aus dem angegebenen durchsichtigen Material bestehen, der das Rohr 12 umgibt. Der die Lichtquelle 11 umgebende Bereich des Gehäuses kann aus einem anderen Material bestehen oder im Extremfall sogar fehlen. Auf die zweite Schrägfläche 7 kann prinzipiell verzichtet werden, der stirnseitige Bereich des Gehäuses 1 zwischen dem Aussendurchmesser des Gehäuses und dem Aussendurchmesser des Rohres 12 würde in der Draufsicht gemäss Fig. 2 trotzdem als Kreisringfläche erscheinen. Durch die Schrägfläche 7 wird jedoch diese Kreisringfläche schärfer begrenzt. Die zweite Öffnung 5 muss nicht wie dargestellt als Sacklochbohrung ausgestaltet sein, sondern kann auch eine Durchgangsbohrung sein, wobei die Stirnfläche des Rohres 12 gegenüber der Stirnfläche des Gehäuses zurückversetzt sein kann, mit dieser bündig sein kann oder über diese vorstehen kann. Die gezeigte Ausgestaltung erleichtert aber insbesondere die vollständige Abdichtung des Gehäuses und damit den Schutz gegen eindringende Stoffe wie Schmutz und Feuchtigkeit.

Die oben beschriebenen geometrischen Formen eignen sich besonders gut, um die Längsachse 2 der Visiereinrichtung mit der Blickrichtung eines Benutzers auszurichten. Jedoch müssen Gehäuse 1, die Lichtquelle 11 und das Rohr 12 nicht zwingend kreisrund sein, sondern es sind auch andere Querschnittsformen denkbar, um den Zweck der Visiereinrichtung zu erfüllen.

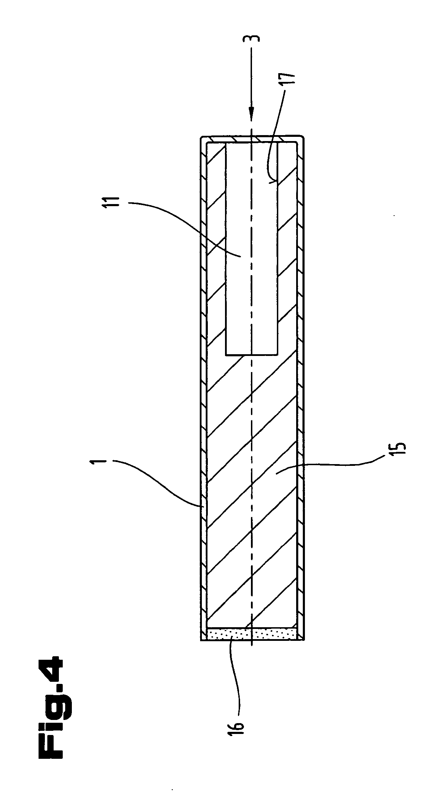

Fig. 4 zeigt eine besonders einfach der Vorrichtung. In einem Gehäuse 1, das hier als Glasröhrchen ausgebildet ist, ist ein Körper 15 aus einem Licht leitenden und/oder Licht sammelnden Material angeordnet. Die Bezugszahl 3 bezeichnet auch bei diesem Beispiel die Einsichtrichtung. Der Körper 15 hat an der in Fig. 4 rechten Stirnseite eine Bohrung 17, in der eine Lichtquelle 11 aufgenommen ist. Auf der gegenüberliegenden Seite, in der Figur links, ist das Gehäuse mit einem Verschluss 16 dicht verschlossen, beispielsweise durch Ausgiessen mit Silikon. Anders als beim vorangehend beschriebenen Ausführungsbeispiel tritt beim Beispiel nach Fig. 4 kein durch einen axialen Versatz der jeweils zum Benutzer hin orientierten Stirnfläche der Lichtquelle 11 und der Körpers 15 bedingter Parallaxeffekt auf, wenn man nicht genau in Achsrichtung in die Visiereinrichtung schaut. Somit ist diese Ausführungsart für Anwendungen weniger geeignet, bei denen es um eine hohe Präzision beim Visieren geht. Dafür ist sie einfacher und kostengünstiger herzustellen.

Wie einleitend dargelegt gibt es für die erfindungsgemässe Visiereinrichtung vielerlei Anwendungen. Bei Schusswaffen kann eine erfindungsgemässe Visiereinrichtung beispielsweise als Korn eingesetzt und ähnlich wie ein Diopter verwendet werden.

Der Ordnung halber sei abschliessend darauf hingewiesen, dass zum besseren Verständnis des Aufbaus der Visiereinrichtung diese bzw. deren Bestandteile teilweise unmassstäblich und/oder vergrössert und/oder verkleinert dargestellt wurden.

### Bezugszeichenaufstellung

- 1: Gehäuse
- 2: Längsachse
- 3: Einsichtrichtung
- 4: erste Öffnung
- 5: zweite Öffnung

- 6: erste Schrägfläche
- 7: zweite Schrägfläche
- 8: erste Bodenfläche
- 9: zweite Bodenfläche
- 10: Vertiefung

- 11: Lichtquelle
- 12: Röhrchen
- 13: Stirnfläche von 12
- 14: Punkt
- 15: Körper

- 16: Verschluss
- 17: Bohrung

## Patentansprüche

1. Visiereinrichtung, um ein mit der Visiereinrichtung verbundenes Gerät auszurichten, indem die Achse der Visiereinrichtung mit einer Sichtachse ausgerichtet wird, enthaltend eine längliche Lichtquelle (11), welche eine Kapsel ist, die auf der Basis von Radiolumineszenz Licht emittiert, dabei handelt es sich um ein luftdicht verschlossenes Glasröhrchen, das auf der Innenseite mit einem Leuchtstoff beschichtet und mit gasförmigem Tritium gefüllt ist, und einen länglichen Körper (12, 15) aus einem Licht leitenden und/oder Licht sammelnden Material, wobei die Lichtquelle und der Körper koaxial angeordnet sind, **dadurch gekennzeichnet, dass** der Körper als Rohr (12) ausgebildet ist, und dass ein mindestens einen Teil der Mantelfläche des Rohrs (12) umgebendes Gehäuse (1) vorhanden ist, das aus einem durchsichtigen Material besteht, das sich vom Material des Rohres (12) unterscheidet, wobei die Lichtquelle (11) einen größeren Außendurchmesser aufweist als das Rohr wobei ein Ausschnitt der Lichtquelle (11) in Form eines zentralen, leuchtenden Punktz (14), mit einem Durchmesser, der dem lichten Querschnitt des Rohrs (12) entspricht durch das Innere des Rohrs (12) hindurch sichtbar ist, wobei das Rohr (12) und das Gehäuse (1) gesammeltes Licht durch Totalreflexion an ihre Stirnflächen (13;7) weiter leiten, wo das Licht austritt, so dass der zentrale Punkt (14) von einer Kreisringfläche (13) umgeben ist, die von einer weiteren kreisringfläche (7) umgeben ist, wobei die Kreisringflächen (13;7) den Stirnflächen (13;7) des Rohrs (12) bzw. des Gehäuses (1) entsprechen.

2. Visiereinrichtung nach Anspruch 1. **dadurch gekennzeichnet, dass** im Material des Körpers (12, 15) Moleküle eingebettet sind, die das Licht streuen.

3. Visiereinrichtung nach Anspruch 2, **dadurch gekennzeichnet, dass** die Moleküle fluoreszierend sind.

4. Visiereinrichtung nach einem der vorangehenden Ansprüche, **dadurch gekennzeichnet, dass** das Material des Körpers (12, 15) eingefärbt ist.

5. Visiereinrichtung nach Anspruch 4, **dadurch gekennzeichnet, dass** die Farbe des Körpers (12, 15) und die Farbe des von der der Lichtquelle (11) abgestrahlten Lichts unterschiedlich sind.

6. Visiereinrichtung nach einem der vorhergehenden Ansprüche, **dadurch gekennzeichnet, dass** das Gehäuse (1) kreiszylindrisch ausgebildet ist und dass die Lichtquelle (11) und das Rohr (12) in passenden Bohrungen (4, 5) des Gehäuses (1) aufgenommen sind.

7. Visiereinrichtung nach Anspruch 6, **dadurch gekennzeichnet, dass** die das Rohr (12) aufnehmende Bohrung (5) des Gehäuses (1) eine Sacklochbohrung mit rechtwinklig zur Längsachse (2) der Visiereinrichtung angeordneter, ebener Bodenfläche (8) ist.

8. Visiereinrichtung nach Anspruch 6 oder 7, **dadurch gekennzeichnet, dass** der Übergang von der Bohrung (4) für die Lichtquelle (11) zur Bohrung (5) für das Rohr (12) eine Schrägfläche (6) in der Form eines Kegelstumpfes aufweist.

9. Visiereinrichtung nach einem der Ansprüche 6 bis 8, **dadurch gekennzeichnet, dass** in der dem Rohr (12) benachbarten Stirnseite des Gehäuses (1) eine Vertiefung (10) angeordnet ist, die eine umlaufende Schrägfläche (6) in der Form eines Kegelstumpfes und eine zentrale, ebene Bodenfläche (9) aufweist.

## Claims

1. Sighting device for aligning a device connected to the sighting device by aligning the axis of the sighting device with a viewing axis, containing an elongate light source (11), which is a capsule emitting light on the basis of radio-luminescence in the form of a glass tube sealed so as to be airtight, which is coated with a luminous material on the internal face and filled with gaseous tritium, and an elongate body (12, 15) made from a material which conducts light and/or collects light, and the light source and body are disposed coaxially, wherein the body is provided in the form of a tube (12), and a housing (1) is provided surrounding at least a part of the casing surface of the tube (12) which is made from a transparent material that is different from the material of the tube (12), and the light source (11) has a bigger external diameter than the tube, and a cutout of the light source (11) in the form of a central illuminating point (14) with a diameter corresponding to the internal cross-section of the tube (12) is visible through the interior of the tube (12), and the tube (12) and the housing (1) direct collected light by total reflection onto their end faces (13; 7) where the light exits so that the central point (14) is surrounded by an annular surface (13) which is surrounded by another annular surface (7), and the annular surfaces (13; 7) correspond to the end faces (13; 7) of the tube (12) respectively the housing (1).

2. Sighting device according to claim 1, wherein molecules which scatter light are embedded in the material of the body (12, 15).

3. Sighting device according to claim 2, wherein the molecules are fluorescent.

4. Sighting device according to one of the preceding claims, wherein the material of the body (12, 15) is colored.

5. Sighting device according to claim 4, wherein the color of the body (12, 15) and the color of the light radiated by the light source (11) are different.

6. Sighting device according to one of the preceding claims, wherein the housing (1) is of a circular cylindrical design and the light source (11) and tube (12) are accommodated in locating bores (4, 5) of the housing (1).

7. Sighting device according to claim 6, wherein the bore (5) of the housing (1) accommodating the tube (12) is a blind bore with a flat base surface (8) disposed at a right angle with respect to the longitudinal axis (2) of the sighting device.

8. Sighting device according to claim 6 or 7, wherein the transition from the bore (4) for the light source (11) to the bore (5) for the tube (12) has an oblique surface (6) in the form of a truncated cone.

9. Sighting device according to one of claims 6 to 8, wherein a recess (10) is disposed in the face of the housing (1) adjacent to the tube (12) which has a circumferentially extending oblique surface (6) in the form of a truncated cone and a central, flat base surface (9).

## Revendications

1. Installation de visée, pour ajuster un appareil relié à l'installation de visée, en ce que l'axe de l'installation de visée est orienté avec un axe de vue, contenant une source de lumière oblongue (11), qui est une capsule, qui émet de la lumière sur la base d'une radioluminescence, il s'agit d'un tube en verre fermé de manière étanche à l'air, qui est revêtu au côté intérieur de matériau luminescent et qui est rempli avec du tritium gazeux, et un corps oblong (12, 15) en un matériau guidant la lumière et/ou recueillant la lumière, où la source de lumière et le corps sont disposés coaxialement, **caractérisée en ce que** le corps est réalisé comme tube (12), et **en ce qu'**un boîtier (1) entourant au moins une partie de la face d'enveloppe du tube (12) est réalisé, qui est constitué d'un matériau transparent qui se distingue du matériau du tube (12), où la source de lumière (11) présente un diamètre extérieur plus grand que le tube, où une section de la source de lumière (11) sous la forme d'un point central lumineux (14), avec un diamètre qui correspond à la section transversale intérieure du tube (12), est visible à travers l'intérieur du tube (12), où le tube (12) et le boîtier (1) transmettent de la lumière recueillie par une réflexion totale à leurs faces frontales (13; 7), où la lumière sort, de sorte que le point central (14) est entouré par une face circulaire annulaire (13) qui est entourée par une autre face circulaire annulaire (7), où les faces circulaires annulaires (13; 7) correspondent aux faces frontales (13; 7) du tube (12) respectivement du boîtier (1).

2. Installation de visée selon la revendication 1, **caractérisée en ce que** des molécules sont noyées dans le matériau du corps (12, 15) qui dispersent la lumière.

3. Installation de visée selon la revendication 2, **caractérisée en ce que** les molécules sont fluorescentes.

4. Installation de visée selon l'une des revendications précédentes, **caractérisée en ce que** le matériau du corps (12, 15) est coloré.

5. Installation de visée selon la revendication 4, **caractérisée en ce que** la couleur du corps (12, 15) et la couleur de la lumière émise par la source de lumière (11) sont différentes.

6. Installation de visée selon l'une des revendications précédentes, **caractérisée en ce que** le boîtier (1) est réalisé en cylindre circulaire, et **en ce que** la source de lumière (11) et le tube (12) sont reçus dans des perçages adaptés (4, 5) du boîtier (1).

7. Installation de visée selon la revendication 6, **caractérisée en ce que** le perçage (5) du boîtier (1) recevant le tube (12) est un perçage de trou borgne avec une face de fond plane (8) disposée perpendiculairement à l'axe longitudinal (2) de l'installation de visée.

8. Installation de visée selon la revendication 6 ou 7, **caractérisée en ce que** le passage du perçage (4) pour la source de lumière (11) au perçage (5) pour le tube (12) présente une face inclinée (6) sous la forme d'un cône tronqué.

9. Installation de visée selon l'une des revendications 6 à 8, **caractérisée en ce que** dans le côté frontal du boîtier (1) avoisinant le tube (12), un creux (10) est ménagé qui présente une face inclinée (6) s'étendant tout autour sous la forme d'un cône tronqué et une face de fond plane centrale (9).
